# EUROPEAN PATENT APPLICATION

(11) **EP 4 461 592 A1**
(43) Date of publication of application: **13.11.2024**
(21) Application number: 24174776.5
(22) Date of filing: 08.05.2024
(51) Int. Cl.: B60L 53/30, B60L 53/62, B60L 53/65, B60L 53/66, B60L 53/68, G06F 8/65

(54) **SOFTWARE UPDATE FOR A VEHICLE VIA AN ELECTRICAL CHARGING STATION**

(30) Priority: 08.05.2023 IL 30276123
(71) Applicant: Red Bend Ltd., 4501307 Hod Ha'Sharon (IL)
(72) Inventor: MANN, Oded, 4372005 Ra'anana (IL); ALBO, Yohan, 9643163 Jerusalem (IL)
(74) Representative: Rummler, Felix

(57) **Abstract**

A vehicle charging station, comprising: a charging processor configured for, when a vehicle is connected to the charging station: sending to the vehicle a request for at least one power level value; and in response to receiving the at least one power level value from the vehicle: computing an expected amount of time for charging at least one battery of the vehicle; computing an expected amount of time for executing an update of digital data of the vehicle, where the expected amount of time includes an amount of time for reverting the update; and subject to identifying that the update time is less than the charging time according to a time comparison test, sending the vehicle an instruction to execute the update while charging the at least one battery.

## Description

### BACKGROUND

Some embodiments described in the present disclosure relate to over the air software distribution and, more specifically, but not exclusively, to over the air software distribution in the automotive industry.

As used herewithin, the term over the air (OTA) distribution (or update) refers to the ability to distribute digital data to a plurality of target devices over a wireless or cellular digital communication network. Such digital data includes, but is not limited to, applications, services and configurations. An application may be a set of computer instructions, for example a firmware image or a software application. A configuration may be a set of parameter values defining the behavior of a component of a device. The component may be a hardware component, a software component, or a combination thereof. OTA distribution is used for a variety of target devices, including mobile phones and Internet-of-Things (IoT) devices, for example a smoke detector, a smart home speaker, and a light bulb controller. There is increasing use of OTA update by mobile operators and telecommunication third parties to configure data updates in SIM cards, distribute system updates, and access services, such as wireless access protocol (WAP) or multimedia messaging service (MMS).

In the automotive industry, OTA update may be used to update one or more of a vehicle's systems, for example the vehicle's infotainment systems.

A typical procedure for using OTA distribution to update some digital data on a plurality of target devices comprises a device management system that manages the plurality of target devices issuing a data update. The data update may be uploaded to one or more servers that are accessed via the Internet, or another wide area network. A target device may download and verify the data update from the one or more servers over a cellular or other digital communication network connection. Once verified, the target device may install the data update. In some procedures, installing the data update is subject to receiving confirmation, for example by prompting a user of the device for confirmation. In some procedures, installing the data update is automatic.

### SUMMARY

Some embodiments described in the present disclosure provide a system and a method for updating digital data of a vehicle, when the vehicle is connected to an electrical vehicle charging station. Optionally, updating the digital data comprises identifying that an expected amount of time for executing an update of the digital data is less than an expected charging time of the vehicle. Identifying that an expected amount of time for executing an update is less than the expected charging time facilitates a complete and successful execution of the update and reduces the likelihood of placing the vehicle in a non-operational state, thus increasing reliability of the vehicle and improving the overall consumer experience related to the vehicle update.

The foregoing and other objects are achieved by the features of the independent claims. Further implementation forms are apparent from the dependent claims, the description and the figures.

According to a first aspect, a vehicle charging station (charging station) comprises: at least one hardware processor (station processor) configured for, when a vehicle is connected to the charging station: sending to the vehicle a request for at least one power level value; and in response to receiving the at least one power level value from the vehicle: computing an expected amount of time for charging at least one battery of the vehicle (a charging time); computing an expected amount of time for executing an update of digital data of the vehicle (an update time), where the update time includes an amount of time for reverting the update; and subject to identifying that the update time is less than the charging time according to a time comparison test, sending the vehicle an instruction to execute the update while charging the at least one battery.

According to a second aspect, a method for a vehicle charging station (charging station) comprises: when a vehicle is connected to the charging station: sending to the vehicle a request for at least one power level value; and in response to receiving the at least one power level value from the vehicle: computing an expected amount of time for charging at least one battery of the vehicle (a charging time); computing an expected amount of time for executing an update of digital data of the vehicle (an update time), where the update time includes an amount of time for reverting the update; and subject to identifying that the update time is less than the charging time according to a time comparison test, sending the vehicle an instruction to execute the update while charging at least one battery of the vehicle.

According to a third aspect, a vehicle comprises: at least one hardware processor (vehicle processor), configured for: when the vehicle is connected to a vehicle charging station (charging station): providing to the charging station at least one power level value in response to receiving therefrom a request for the at least one power value; and while charging at least one battery of the vehicle, executing an update of digital data of the vehicle in response to receiving from the charging station an instruction to execute the update.

According to a fourth aspect, a method for a vehicle comprises: when the vehicle is connected to a vehicle charging station (charging station): providing to the charging station at least one power level value in response to receiving therefrom a request for the at least one power value; and while charging at least one battery of the vehicle, executing an update of digital data of the vehicle in response to receiving from the charging station an instruction to execute the update.

According to a fifth aspect, a system for updating digital data in a vehicle comprises: a vehicle, comprising at least one hardware processor (vehicle processor); and a vehicle charging station (charging station), comprising at least one other hardware processor (station processor) configured for, when the vehicle is connected to the charging station: sending to the vehicle a request for at least one power level value; and in response to receiving the at least one power level value from the vehicle: computing an expected amount of time for charging at least one battery of the vehicle (a charging time); computing an expected amount of time for executing an update of digital data of the vehicle (an update time), where update time includes an amount of time for reverting the update; and subject to identifying that the update time is less than the charging time according to a time comparison test, sending the vehicle an instruction to execute the update; wherein the vehicle processor is configured for, when the vehicle is connected to the charging station: providing to the charging station at least one power level value in response to receiving therefrom the request for the at least one power value; and while charging the at least one battery, executing the update in response to receiving from the charging station the instruction to execute the update.

According to a sixth aspect, a method for updating digital data in a vehicle comprises: when a vehicle is connected to a vehicle charging station (charging station): computing an expected amount of time for charging at least one battery of the vehicle (a charging time); computing an expected amount of time for executing an update of digital data of the vehicle (an update time), where the update time includes an amount of time for reverting the update; and subject to identifying that the update time is less than the charging time according to a time comparison test, executing the update while charging the at least one battery.

With reference to the first and second aspects, in a first possible implementation of the first and second aspects the charging station further comprises at least one digital communication network interface (station data interface), connected to the station processor, the vehicle comprises at least one other hardware processor (vehicle processor), the vehicle processor and the station processor are further configured for establishing at least one digital data communication channel (data channel) there between via the station data interface, and sending the request for the at least one power level value to the vehicle is via the data channel using the station data interface. Establishing the data channel between the vehicle processor and the station processor allows providing the vehicle with digital data without requiring the vehicle to be connected to another digital data communication network, increasing usability of the vehicle and increasing reliability of execution of the update. In addition, sending the request for the at least one power level value to the vehicle via the data channel using the station data interface reduces a likelihood of tampering with the request compared to sending a request to the vehicle via a wide area network, for example a cellular network. Optionally, the station data interface comprises at least one of: a digital data communication interface in a charging plug of the charging station, a digital data communication interface in a charging socket of the charging station, and a wireless digital data network interface. Optionally, for example when the station data interface comprises a wireless digital data network interface, the vehicle processor is further configured for providing to the charging station at least one credential value for the purpose of establishing the data channel. Using a digital data communication interface implemented in a charging plug or charging socket of the charging station, and additionally or alternatively providing one or more credential values for the purpose of establishing the data channel, reduces a likelihood of tampering with data transmitted via the data channel compared to using another data channel established via a wireless network without using at least one credential value, increasing reliability of the data channel and thus increase reliability of executing the update. Optionally, the station processor is further configured for providing the vehicle, using the data channel, with updated digital data for the purpose of executing the update.

With reference to the first and second aspects, or the first implementation of the first and second aspects, in a second possible implementation of the first and second aspects the station processor is further configured for connecting via the station data interface to at least one user application, executed by at least one additional hardware processor. Optionally, the station processor is further configured for receiving from the at least one user application at least one user input value for the purpose of computing the charging time. Optionally, the station processor is further configured for sending the vehicle an instruction to execute the update subject to receiving at least one user confirmation value from the at least one user application. Using one or more user input values when computing the charging time increases accuracy of the charging time, reducing a likelihood of having to terminate executing the update prematurely, further increasing reliability of executing the update and therefore increasing reliability of the vehicle. Executing the update subject to receiving one or more user confirmation values reduces a likelihood of having to terminate executing the update prematurely, further increasing reliability of executing the update and therefore increasing reliability of the vehicle.

With reference to the first and second aspects, or the first implementation of the first and second aspects, in a third possible implementation of the first and second aspects the station processor is further configured for: sending the vehicle, via the data channel, a request for at least one vehicle data value; and receiving the at least one vehicle data value from the vehicle, via the data channel. Collecting one or more vehicle data values while the vehicle is connected to the charging station facilitates providing a maintenance service with diagnostic information and additionally or alternatively with statistical information regarding the vehicle, increasing accuracy of a maintenance operation performed of the vehicle thus increasing reliability and usability of the vehicle.

With reference to the first and second aspects, in a fourth possible implementation of the first and second aspects the station processor is further configured for sending the vehicle, via the data channel, a maintenance instruction to execute at least one of: a diagnostic operation, and a self-maintenance operation.

With reference to the first and second aspects, in a fifth possible implementation of the first and second aspects the digital data comprises one or more sets of computer instructions. Optionally, the digital data comprise one or more sets of component configuration values. Executing an update of one or more sets of computer instructions, and additionally or alternatively or one or more sets of component configuration values, increases reliability of the vehicle.

With reference to the third and fourth aspects, in a first possible implementation of the third and fourth aspects the vehicle further comprises at least one digital communication network interface (vehicle data interface), connected to the vehicle processor, and the vehicle processor is further configured for providing the at least one power level value to the charging station via the vehicle data interface. Using a power level value increases accuracy of the charging time, thus increasing reliability of executing the update.

With reference to the third and fourth aspects, or the first implementation of the third and fourth aspects, in a second possible implementation of the third and fourth aspect executing the update comprises retrieving updated digital data via the vehicle data interface. Optionally, the updated digital data is retrieved from the charging station. Retrieving the updated digital data from the charging station facilitates executing the update when the vehicle is not connected directly to another network. Optionally, the vehicle data interface is connected to at least one cellular data communication network and retrieving the updated digital data is via the at least one cellular data communication network. Optionally, retrieving the updated digital data is via at least one digital data communication channel (data channel) established with the charging station using the vehicle data interface. Optionally, the vehicle processor is further configured for sending at least one vehicle data value to the charging station via the vehicle data interface, while charging the at least one battery, in response to receiving from the charging station a request for the at least one vehicle data value.

With reference to the third and fourth aspects, in a third possible implementation of the third and fourth aspects the vehicle processor is further configured for executing while charging the at least one battery at least one operation, selected from the group of operations of: a diagnostic operation, and a self-maintenance operation, in response to receiving from the charging station a maintenance instruction to execute the at least one operation.

With reference to the third and fourth aspects, in a fourth possible implementation of the third and fourth aspects the vehicle further comprises a human-machine interface for interacting with a user. Optionally, the vehicle processor is further configured for: receiving from the user at least one confirmation value via the human-machine interface; and executing the update subject to receiving the at least one confirmation value.

With reference to the third and fourth aspects, in a fifth possible implementation of the third and fourth aspects the digital data comprises one or more sets of computer instructions. Optionally, the digital data comprise one or more sets of component configuration values.

With reference to the fifth and sixth aspects, in a first possible implementation of the fifth and sixth aspects the digital data comprises one or more sets of computer instructions. Optionally, the digital data comprise one or more sets of component configuration values.

With reference to the fifth and sixth aspects, in a second possible implementation of the fifth and sixth aspects computing the charging time is according to at least one power level value of the vehicle. Optionally, the method further comprises: when the vehicle is connected to the charging station: sending from the charging station to the vehicle a request for the at least one power level value; and providing, by the vehicle to the charging station, the at least one power level value in response to receiving the request for the at least one power level value.

With reference to the fifth and sixth aspects, in a third possible implementation of the fifth and sixth aspects executing the update comprises: sending from the charging station to the vehicle an instruction to execute the update; and executing the update by at least one hardware processor of the vehicle (vehicle processor) while charging the at least one battery, in response to receiving from the charging station the instruction to execute the update.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which embodiments pertain. Although methods and materials similar or equivalent to those described herein can be used in the practice or testing of embodiments, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRA WING(S)

Some embodiments are herein described, by way of example only, with reference to the accompanying drawings. With specific reference now to the drawings in detail, it is stressed that the particulars shown are by way of example and for purposes of illustrative discussion of embodiments. In this regard, the description taken with the drawings makes apparent to those skilled in the art how embodiments may be practiced.

In the drawings:
FIG. 1 is a schematic block diagram of an exemplary system, according to some embodiments;
FIG. 2 is a flowchart schematically representing an optional flow of operations, according to some embodiments;
FIG. 3 is a sequence diagram of another optional flow of operations, according to some embodiments;
FIG. 4 is a sequence diagram of yet another optional flow of operations, according to some embodiments; and
FIG. 5 is a sequence diagram of an additional optional flow of operations, according to some embodiments.

### DETAILED DESCRIPTION

The following description focuses on providing an OTA update for digital data of a device. Some examples of digital data of a device include a plurality of computer instructions, for example a firmware image or a patch to a firmware image, and a set of component configuration values, for example a set of configuration values addressing a safety concern. A firmware image may be, for example, a monolithic software package that is burned into a non-volatile memory component and loaded by a hardware processor after a power cycle. Some parts of the following description focus on updating firmware installed on a device, however the following systems and methods as described herewithin are not limited to OTA update of firmware and may be applied additionally, or alternatively, to OTA update of other digital data, some examples including digital configuration data and a software application.

In addition, while the following description focuses on performing an OTA update for a vehicle connected to a charging station, the following systems and methods may be used to perform an OTA update for other devices, for example a robotic device connected to a docking station.

As used herewithin, the term "electrical vehicle" refers to a vehicle comprising one or more electrically chargeable power units (batteries). The one or more batteries may be used to power one or more electric motors installed in the electrical vehicle. An electrical vehicle may comprise one or more non-electric motors, additionally or alternatively to the one or more electric motors. An electrical vehicle may comprise no electric motors and the batteries may have a use that is not propulsion of the vehicle. While the following description focuses on performing an OTA update in an electrical vehicle connected to an electrical vehicle charging station, the following systems and methods may be used to perform an OTA update for vehicles comprising other types of chargeable power units, while connected to a suitable charging station.

From a management point of view, providing an OTA update has an advantage of not requiring an end user to take the device to a support workshop. However, it is crucial to monitor progress of an OTA update as an interrupted OTA update, which does not finish successfully, might leave the device in a non-operational state. For some devices, for example mobile phones, this may be a temporary inconvenience for the end user that is remedied when the OTA update is repeated. For some devices, for example a vehicle, besides inconvenience this could pose a major safety risk, particularly when occurring while the vehicle is moving.

One way to reduce such risks is to perform OTA updates only when the device is not in use, for example when a phone is silenced for the night or when a vehicle is parked. Automatic initiation of an OTA update when the device is not in use carries a risk of the OTA update being interrupted, for example by the device being shut off by a user or due to a drained power source, or by the OTA update being interrupted by the user resuming use of the device, for example driving the vehicle. In addition, for some devices the OTA update process leaves the device inoperable for an amount of time during the OTA update process. Relying on OTA updates initiated by a user is also insufficient, as a user may be reluctant to initiate an OTA update that renders the device inoperable for some amount of time during the update. As a result, OTA updates might not be installed as frequently and as widely as needed, leaving some devices to operate with outdated software, lacking in essential functionality, for example security functionality of safety functionality.

There is a need to provide a friendly user experience to increase the likelihood of an OTA update being performed, while ensuring an uninterrupted and safe flow when performed. In addition, there is a need for the user experience to maintain high levels of security.

To do so the present disclosure proposes, in some embodiments described herewithin, identifying one or more occasions when the device is guaranteed not to be in use and to compute an expected amount of time in which the device will not be in use. Further, the present disclosure proposes in such embodiments comparing the expected amount of time in which the device will not be in use to an amount of time for performing an update, and initiating an update process subject to the amount of time for performing the update being less than the expected amount of time in which the device will not be in use. Computing an amount of time in which the device is expected not to be in use increases the likelihood of the update process completing without being interrupted, thus increasing reliability of the device. Initiating the update process subject to the amount of time for performing the update being less than the expected amount of time in which the device is not in use allows the update process to be performed while the device is not in use, increasing availability of the device by reducing an amount of time in which the device is inoperable due to the update process.

More specifically, the present disclosure proposes identifying, in some embodiments described herewithin, when a device is not in use while it is connected to a docking station. In one example when a robotic device, for example a robotic vacuum cleaner, is connected to its docking station, there is an expectation that the device is not in use.

In another example, when a vehicle is connected to an electrical vehicle charging station (charging station) for charging, there is an expectation that the vehicle remains stationary for the duration of the charging. The present disclosure, in some embodiments described herewithin, proposes performing an update of digital data of the vehicle while the vehicle is connected to the charging station.

To do so, in some embodiments described herewithin, the present disclosure proposes sending to a hardware processor of the vehicle a request for one or more power values when the vehicle is connected to the charging station and computing, in response to receiving the one or more power values, an expected amount of time for charging one or more batteries of the electrical vehicle (a charging time). Optionally, the charging time is computed using the one or more power values. Optionally, the charging time is an amount of time until at least one of the one or more batteries are fully charged. Optionally, the charging time is an amount of time until at least one battery of the one or more batteries is partially charged. Optionally, the charging time is an amount of time until at least one battery of the one or more batteries is charged to a threshold charging level. Further in such embodiments, the present disclosure proposes computing an expected amount of time for executing a data update of digital data of the vehicle (an update time). Optionally, the update time includes an amount of time for reverting the data update. Including the amount of time for reverting the data update in the update time reduces the likelihood of the electrical vehicle becoming inoperable should the data update fail. Optionally, the present disclosure proposes sending the vehicle an instruction to execute the data update while charging the one or more batteries of the vehicle, subject to identifying that the update time is less than the charging time.

Optionally, the charging station and the vehicle communicate via one or more digital communication networks, for example via a digital data communication interface in a charging plug or charging socket of the charging station. In the context of the present disclosure, there is no significance whether the charging station has a charging plug or a charging socket for connecting to the vehicle, and the solutions described herewithin may be applied to either implementation. Thus, for brevity, henceforth the term "charging plug" is used to mean "a charging plug or charging socket". Optionally, the charging station and the vehicle establish a one or more data communication channels there between, optionally via the one or more digital communication networks.

Optionally, the charging station and vehicle communicate via one or more wireless digital communication networks, for example Bluetooth or Wi-Fi. Optionally, the charging station has a Wi-Fi hotspot to which the vehicle may connect.

Optionally, the charging station provides the vehicle with updated digital data for executing the data update. Optionally, the vehicle retrieves the updated digital data via one or more cellular data communication networks, some examples including, but not limited to, a Global System for Mobile Communications (GSM) network, a Universal Mobile Telecommunications System (UMTS) network, and a fifth-generation technology standard for broadband cellular networks (5G) network.

Optionally, the charging station connects to one or more user applications. Optionally, the one or more user applications are executed by one or more hardware processors of the vehicle. Optionally, the one or more user applications are executed by one or more other hardware processors, for example on a mobile device, for example a mobile phone or a tablet.

Optionally, the charging station connects to a backend server.

In addition, in some embodiments described herewithin, the present disclosure proposes performing one or more other operations while the vehicle is connected to the charging station. For example, the charging station may send the vehicle an instruction to execute a diagnostic operation. Optionally the instruction is to execute the diagnostic operation while charging. In another example, the charging station may send the vehicle an instruction to execute a self-maintenance operation, for example execute a self-repair procedure, for example a procedure to recalibrate one or more operational parameters of a component of the vehicle. In another example, the vehicle may send the charging station one or more vehicle values, for example a status value or a statistical value.

Before explaining at least one embodiment in detail, it is to be understood that embodiments are not necessarily limited in its application to the details of construction and the arrangement of the components and/or methods set forth in the following description and/or illustrated in the drawings and/or the Examples. Implementations described herein are capable of other embodiments or of being practiced or carried out in various ways.

Embodiments may be a system, a method, and/or a computer program product. The computer program product may include a computer readable storage medium (or media) having computer readable program instructions thereon for causing a processor to carry out aspects of the embodiments.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of embodiments may be assembler instructions, instruction-set-architecture (ISA) instructions, machine instructions, machine dependent instructions, microcode, firmware instructions, state-setting data, or either source code or object code, natively compiled or compiled just-in-time (JIT), written in any combination of one or more programming languages, including an object oriented programming language such as Smalltalk, C++, Java, Object-Oriented Fortran or the like, an interpreted programming language such as JavaScript, Python or the like, and conventional procedural programming languages, such as the "C" programming language, Fortran, or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), a coarse-grained reconfigurable architecture (CGRA), or programmable logic arrays (PLA) may execute the computer readable program instructions by utilizing state information of the computer readable program instructions to personalize the electronic circuitry, in order to perform aspects of embodiments.

Aspects of embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

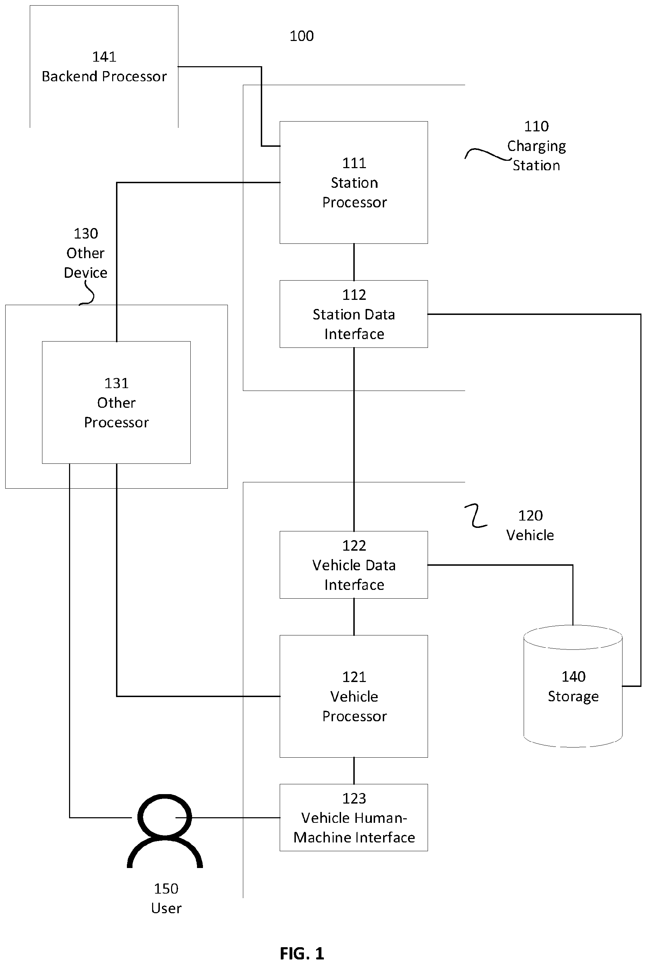

Reference is now made to FIG. 1, showing a schematic block diagram of an exemplary system 100, according to some embodiments. In such embodiments, charging station 110 comprises at least one hardware processor 111 (station processor 111), optionally connected to at least one digital communication network interface 112 (station data interface 112). Optionally, station data interface 112 comprises a digital data communication interface in a charging plug of charging station 110, for example a serial digital data communication interface or an Ethernet network interface. Optionally, station data interface 112 comprises a wireless digital data network interface, for example a Bluetooth interface or a Wi-Fi interface. Optionally, the wireless digital data network interface comprises a Wi-Fi hotspot. Optionally, station data interface 112 is connected to a local area network, for example an Ethernet network. Optionally, station data interface 112 is connected to a wide area network, for example the Internet. Optionally, charging station 110 is an electrical vehicle charging station.

Optionally, system 100 comprises at least one device 120. Optionally, at least one device 120 is at least one vehicle. For clarity, the following description focuses on one vehicle; however, the following description may be applied to more than one vehicle.

Optionally, vehicle 120 comprises at least one hardware processor 121 (vehicle processor 121), optionally connected to at least one other digital communication network interface 122 (vehicle data interface 122). Optionally, vehicle processor 121 is connected to station processor 111, optionally via station data interface 112. Optionally, vehicle processor 121 is connected to station processor 111 via station data interface 112 additionally via vehicle data interface 122. Optionally, vehicle data interface 122 is additionally, or alternatively, connected to one or more cellular networks, for example to connect to one or more non-volatile digital storage 140 (digital storage 140). Some examples of a non-volatile digital storage are a storage network and a network connected storage. Optionally, vehicle processor 121 retrieves updated digital data from digital storage 140, optionally via the one or more cellular networks, optionally via vehicle data interface 122. Optionally, the charging station is connected to digital storage 140, for example via station data interface 112. Optionally, the updated digital data comprises one or more updated sets of computer instructions. Optionally, the updated digital data comprises one or more updated sets of component configuration values of one or more components of vehicle 120.Optionally, vehicle data interface 122 is connected to one or more local area networks, for example an Ethernet network, or via a Bluetooth interface or a Wi-Fi interface. Optionally, vehicle data interface 122 is connected to a Wi-Fi hotspot in station data interface 112. Optionally, vehicle processor 121 is connected to digital storage 140 via a local area network using vehicle data interface 122. Connecting digital storage 140 to vehicle processor 121 via a local area network allows reducing an amount of time required for vehicle processor 121 to retrieve the updated digital data from digital storage 140 compared to retrieving the updated digital data from another digital storage connected thereto using a wide area network, for example a cellular network. Optionally, station processor 111 stores the updated digital data on digital storage 140, optionally when vehicle 120 is not connected to charging station 110. Optionally, vehicle processor 121 accesses digital storage 140 via station processor 111.

Optionally, system 100 comprises at least one other hardware processor 131 (other processor 131), optionally executing one or more user applications. Optionally, other processor 131 is installed in other device 130, for example a mobile phone or a tablet operated by user 150. Optionally, other processor 131 is installed in vehicle 120.

Optionally, station processor 111 is connected to at least one additional hardware processor 141 (backend processor). Optionally, backend processor 141 is at least part of a backend server of system 100. Optionally the station processor 111 is connected to the backend processor 141 via at least one digital communication network interface of charging station 110. Optionally, vehicle processor 121 retrieves the updated digital data from backend processor 141.

Optionally, vehicle 120 comprises at least one human-machine interface 123 (device HMI 123), optionally connected to vehicle processor 121. For example, device HMI 123 may be a touch screen installed in vehicle 120. Optionally, device HMI 123 is a button. Optionally, user 150 provides one or more values to system 100 via device HMI 123.

To update digital data of vehicle 120, in some embodiments described herewithin system 100 implements the following optional method.

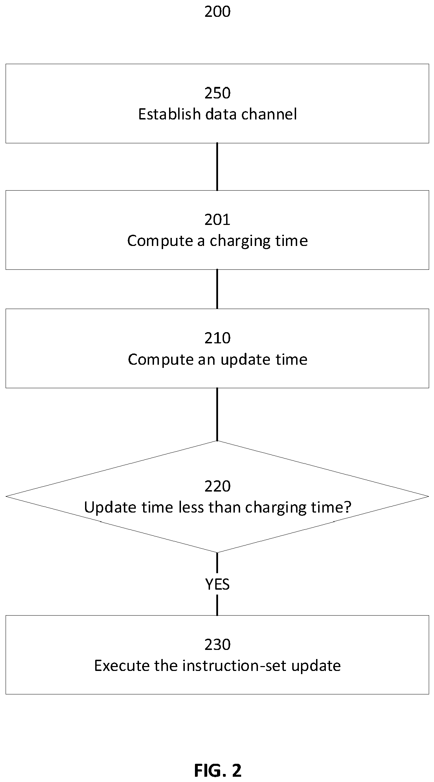

Reference is now made also to FIG. 2, showing a flowchart schematically representing an optional flow of operations 200, according to some embodiments. It should be noted that FIG. 2 shows one possible distribution of operations among the various processors of system 100, but the steps of method 200 may be distributed in other ways among the processors of system 100. Optionally, when vehicle 120 is connected to charging station 110, station processor 111 computes in 201 an expected amount of time for charging the battery of vehicle 120 (a charging time). Optionally, before executing 201, station processor 111 determines that updated digital data (an update) is pending for the vehicle, for example by communicating with backend processor 141. Optionally the update comprises updated computer instructions. Optionally, the update comprises an updated set of component configuration values. Optionally, 201 and following steps of method 200 are executed, by station processor 111 and additionally or alternatively another processor, subject to determining that an update is pending for the vehicle. Optionally, the charging time is computed according to a user preference value, some examples being an identified cost of charging, i.e. an identified monetary amount, and in identified battery charging level. Optionally, the charging time is computed according to one or more other limitations, for example one or more historical values. Some examples of a historical value are a historical charging time and a historical monetary amount. Optionally, in 201 station processor 111 retrieves the charging time from backend processor 141. In 210, station processor 111 optionally accesses an expected amount of time for executing a data update of digital data of vehicle 120 (an update time). The update time may differ between vehicle models, and additionally or alternatively may depend on a software configuration of vehicle 120, on vehicle processor workload at the time of update, etc. Optionally, in 210 station 111 computes the update time. Optionally, the update time is computed by backend processor 141 and in 210 station processor 111 retrieves the update time from backend processor 141. Optionally, the update time is computed by other processor 131 and in 210 station processor 111 retrieves the update time from other processor 131. Optionally, the update time is computed by vehicle processor 121 and in 210 station processor 111 retrieves the update time from vehicle processor 121. Optionally, the update time includes an amount of time for reverting the data update. Optionally, in 220 station processor 111 determines whether the update time is less than the charging time. Subject to identifying that the update time is less than the charging time, in 230 vehicle processor 121 optionally executes an update of the one or more instruction sets.

For brevity, henceforth the noun "update" is used to mean "data update" and the terms are used interchangeably.

Optionally, in 250 station processor 111 and vehicle processor 121 establish one or more digital data communication channels there between, where a digital data communication channel comprises one or more streams of digital data. For brevity, henceforth the term data channel is used to mean one or more digital data communication channels. Optionally, station processor 111 and vehicle processor 121 establish the data channel using one or more of station data interface 112 and vehicle data interface 122. Optionally, station processor 111 and vehicle processor 121 use one or more of station data interface 112 and vehicle data interface 122 to establish an electrical charging interface there between.

Optionally, vehicle processor 122 provides one or more credential values to charging station 110 for the purpose of establishing the data channel. For example, a credential value may be a username and additionally or alternatively a password, for example when the data channel is established over a Wi-Fi connection. Optionally a credential value is a certificate.

When vehicle 120 is connected to charging station 110, the steps of method 200 may be distributed between various processors of system 100 in more than one way. The following description demonstrates some possible implementations, however it should be noted that other combinations are possible.

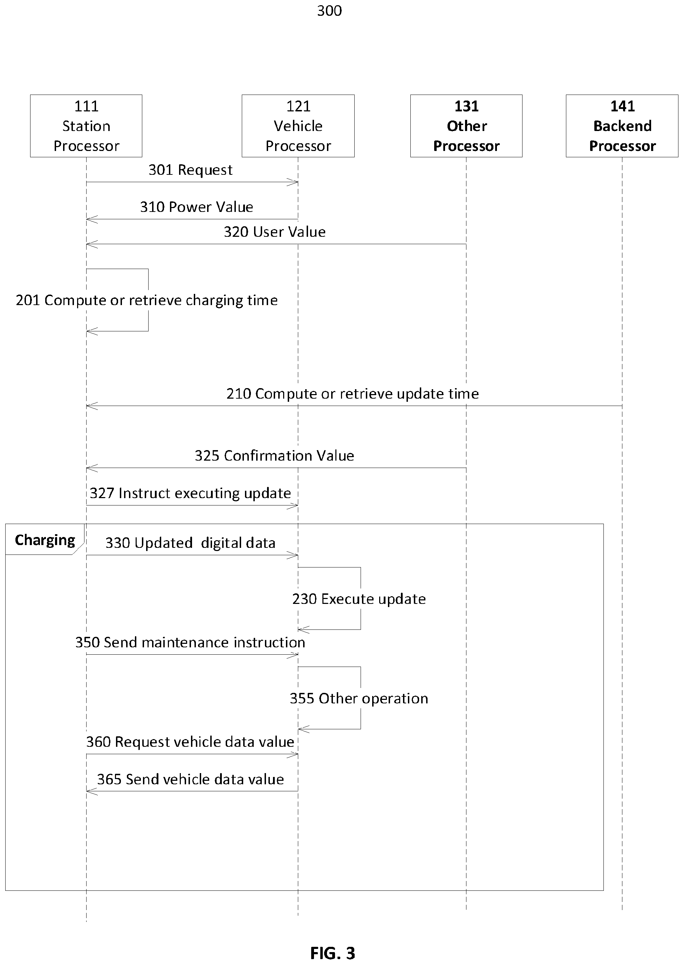

Reference is now made also to FIG. 3, showing a sequence diagram of another optional flow of operations 300, according to some embodiments. In such embodiments, in 301 station processor 111 sends to vehicle 120 a request for one or more power level values and optionally vehicle processor 121 receives the request. A power level value may be a capacity of a battery of the electrical device 120. Another example of a power level is a remaining charge percentage of the battery. In 310, station processor 111 optionally receives from vehicle 120 one or more power values, optionally sent by vehicle processor 121, optionally in response to receiving the request in 301. Optionally, in 201 station processor 111 computes the charging time using the one or more power level values. Optionally, in 201 station processor 111 retrieves the charging time from backend processor 141. Optionally, station processor 111 provides the one or more power level values to the backend processor 141. Optionally, before executing 201, station processor 111 determines that an update is pending for the vehicle, for example by communicating with backend processor 141. Optionally, 201 and other steps of method 300 are executed, by station processor 111 and additionally or alternatively another processor, subject to determining that an update is pending for the vehicle.

Optionally, in 320, the station processor 111 receives from other processor 131 one or more user input values, for example a value provided by user 150 via one or more user applications executed by other processor 131. For example, a user input value may be an amount of charging time, for example when user 150 limits the amount of charging time. Another example of a user input value is a target percentage of battery capacity, for example when user 150 limits charging to the target percentage of battery capacity. Optionally, station processor 111 computes the charging time using the one or more user input values.

Optionally, station processor 111 provides user 150 with one or more indications via the one or more user applications. For example, station processor 111 may provide user 150 with one or more of: an expected duration of charging, an expected duration of executing the update, a description of an updated set of instructions, and an indication whether an update is possible.

In 327, station processor 111 optionally sends vehicle 120 an instruction to execute the update, optionally while charging the one or more batteries of vehicle 120. Optionally, vehicle processor 121 receives the instruction. Optionally, station processor 111 sends the instruction to execute the update subject to identifying in 220 that the update time is less than the charging time.

In 330, vehicle processor 121 optionally retrieves updated digital data. Optionally, the updated digital data comprises one or more updated sets of computer instructions. Optionally, the updated digital data comprises one or more updated sets of component configuration values. Optionally, in 330 station processor 111 provides the updated digital data to vehicle 120, optionally via the data channel. Optionally, the updated digital data is stored on the charging station 110. Optionally, station processor 111 accesses storage 140, optionally via station data interface 112, to retrieve the updated digital data for the purpose of providing the updated digital data to the vehicle 120. Optionally, vehicle processor 121 accesses storage 140 to retrieve the updated digital data, for example via a cellular network via vehicle data interface 122. Optionally, vehicle processor 121 retrieves the updated digital data from backend processor 141.

In 230, vehicle processor 121 optionally executes the update, optionally while charging the one or more batteries of vehicle 120. Optionally, executing the update completes while charging the one or more batteries. Optionally, executing the update completes after charging the one or more batteries has stopped.

Optionally, in 325 station processor 111 receives one or more user confirmation values from the one or more user applications, for example from other processor 131. For example, the one or more user applications may display a prompt to user 150 asking for confirmation to execute the update. Optionally, the station processor 111 receives the one or more user confirmation values from vehicle processor 122. Optionally, station processor 111 sends the instruction to execute the update to vehicle 120 subject to receiving the one or more user confirmation values.

Optionally, in 350, station processor 111 sends vehicle 120 a maintenance instruction to execute on or more other operations. Some examples of another operation include, but are not limited to, a diagnostic operation and a self-maintenance operation of the vehicle. Optionally vehicle processor 121 receives the maintenance instruction. Optionally, in 355 vehicle processor 121 executes the one or more other operations, optionally while charging the one or more batteries. Optionally, vehicle processor 121 executes the one or more other operations in response to receiving the maintenance instruction.

In 360, station processor 111 optionally sends a request for one or more vehicle values to vehicle 120, optionally via the data channel. Optionally, vehicle processor 121 receives the request for the one or more vehicle values. A vehicle value may be a status value of vehicle 120, for example for diagnostics. Another example of a vehicle value is a statistical value collected by vehicle processor 121. In 365, vehicle processor 121 optionally sends the one or more vehicle values, optionally in response to receiving the request for the one or more vehicle values.

It should be noted that 350 and 360 may be executed in any order, and thus 355 and 365 may be executed in any order.

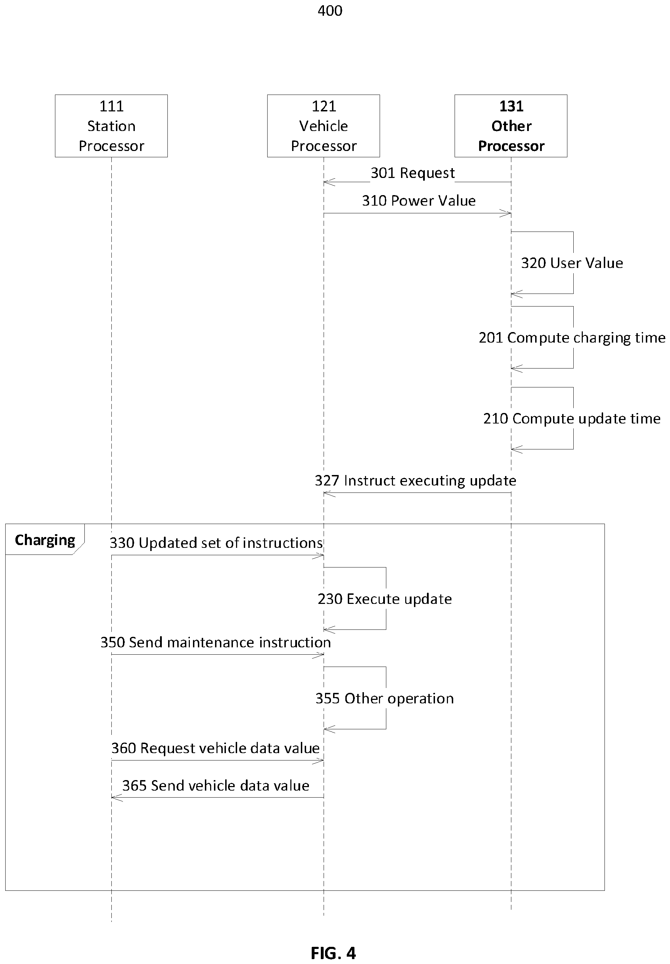

As noted above, the steps of method 200 may be distributed in more than one way between processors of system 100. Reference is now made also to FIG. 4, showing a sequence diagram of yet another optional flow of operations 400, according to some embodiments. In such embodiments, computing the charging time and the update time are done by a user application executed by other processor 131 on other device 130. Thus, in such embodiments, other processor 131 requests in 301 the one or more power values from device processor 121 and in 310 device processor 121 optionally sends the one or more power values to other processor 131. Optionally, in 201 other processor 131 computes the charging time, optionally using the one or more power values, and in 210 other processor 131 optionally computes the update time. Optionally, before executing 201, other processor 131 determines that an update is pending for the vehicle, for example by communicating with backend processor 141. Optionally, 201 and following steps of method 400 are executed, by other processor 131 or another processor, subject to determining that an update is pending for the vehicle. Optionally, in 320 other processor 131 receives one or more user input values and optionally computes the charging time further using the one or more other values. Optionally, in 327 other processor 131 sends vehicle 121 the instruction to execute the data update. Optionally, other processor executes 327 subject to receiving the one or more confirmation values from user 150. Optionally, other processor 131 sends the instruction to execute the update subject to identifying in 220 that the update time is less than the charging time.

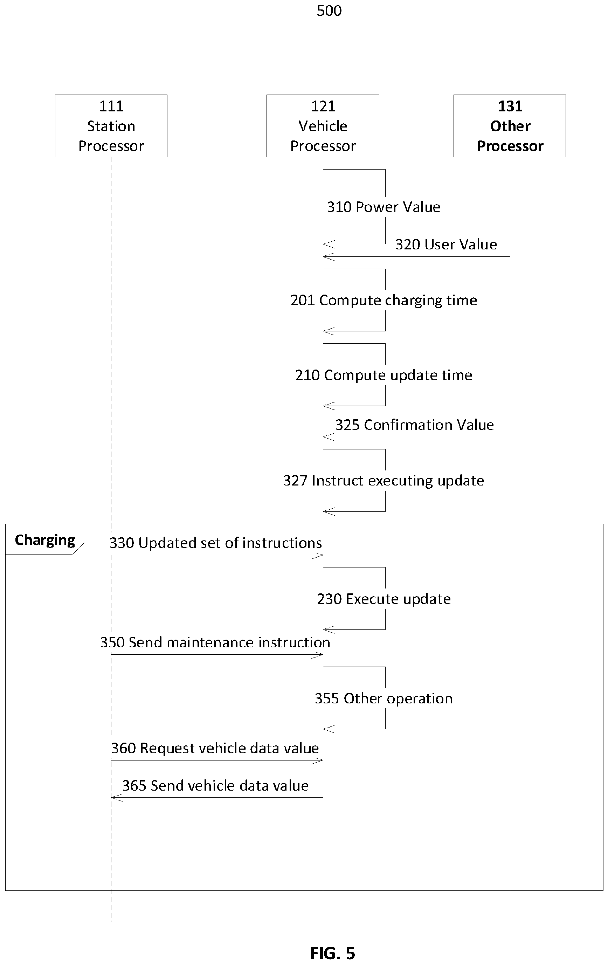

Reference is now made also to FIG. 5, showing a sequence diagram of an additional optional flow of operations 500, according to some embodiments. In such embodiments, computing the charging time and the update time are done by the vehicle processor 121. Thus, in such embodiments in 310 vehicle processor 121 optionally accesses the one or more power values and in 201 vehicle processor 121 optionally computes the charging time, optionally using the one or more power values. Optionally, before executing 201, vehicle processor 121 determines that an update is pending for the vehicle, for example by communicating with backend processor 141 or station processor 111. Optionally, 201 and following steps of method 500 are executed, by vehicle processor 121 and additionally or alternatively another processor, subject to determining that an update is pending for the vehicle. Optionally, in 320 vehicle processor 121 optionally receives the one or more user input values. Optionally, vehicle processor 121 receives the one or more user input values from other processor 131, installed in other device 130. Optionally, vehicle processor 121 receives the one or more user input values via vehicle HMI 123. Optionally, vehicle processor 121 computes the charging time further using the one or more user input values.

Optionally, in 210 the vehicle processor 121 computes the update time. Optionally, the vehicle processor 121 receives the update time from station processor 111, optionally via the data channel. In 327, the vehicle processor 121 optionally decides to execute the update, optionally subject to identifying in 220 that the update time is less than the charging time.

Optionally, the vehicle processor 121 decides to execute the update subject to receiving one or more user confirmation values in 325. Optionally, vehicle processor 121 receives the one or more user confirmation values from user 150 via vehicle HMI 123. Optionally, vehicle processor 121 receives the one or more user confirmation values from other processor 131. Optionally, vehicle processor 121 executes the update in 230 subject to receiving the one or more user confirmation values.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant charging stations and vehicles will be developed and the scope of the terms "charging station" and "vehicle" are intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of embodiments. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of embodiments, which are, for clarity, described in the context of separate embodiments, may also be provided in combination in a single embodiment. Conversely, various features of embodiments, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although embodiments have been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

It is the intent of the applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the present invention. To the extent that section headings are used, they should not be construed as necessarily limiting. In addition, any priority document(s) of this application is/are hereby incorporated herein by reference in its/their entirety.

## Claims

1. A vehicle charging station (charging station), comprising:
at least one hardware processor (station processor) (111) configured for, when a vehicle (120) is connected to the charging station:
sending (301) to the vehicle a request for at least one power level value; and
in response to receiving the at least one power level value from the vehicle:
computing (201) an expected amount of time for charging at least one battery of the vehicle (a charging time);
computing (210) an expected amount of time for executing an update of digital data of the vehicle (an update time), where the update time includes an amount of time for reverting the update; and
subject to identifying that the update time is less than the charging time according to a time comparison test, sending (327) the vehicle an instruction to execute the update while charging the at least one battery.

2. The charging station of claim 1, further comprising at least one digital communication network interface (station data interface) (112), connected to the station processor;
wherein the vehicle comprises at least one other hardware processor (vehicle processor) (121);
wherein the vehicle processor and the station processor are further configured for establishing (250) at least one digital data communication channel (data channel) there between via the station data interface; and
wherein sending the request for the at least one power level value to the vehicle is via the data channel using the station data interface.

3. The charging station of claim 2 wherein the station data interface comprises a wireless digital data network interface; and
wherein the vehicle processor is further configured for providing to the charging station at least one credential value for the purpose of establishing the data channel.

4. The charging station of claim 2, wherein the station processor is further configured for providing (330) the vehicle, using the data channel, with updated digital data for the purpose of executing the update.

5. The charging station of claim 2, wherein the station processor is further configured for:
connecting via the station data interface to at least one user application, executed by at least one additional hardware processor (131);
receiving (320) from the at least one user application at least one user input value for the purpose of computing the charging time; and
sending (327) the vehicle an instruction to execute the update subject to receiving (325) at least one user confirmation value from the at least one user application.

6. A vehicle comprising:
at least one hardware processor (vehicle processor) (121), configured for:
when the vehicle is connected to a vehicle charging station (charging station) (110):
providing (310) to the charging station at least one power level value in response to receiving (301) therefrom a request for the at least one power value; and
while charging at least one battery of the vehicle, executing (230) an update of digital data of the vehicle in response to receiving (327) from the charging station an instruction to execute the update.

7. The vehicle of claim 6, further comprising at least one digital communication network interface (vehicle data interface) (122), connected to the vehicle processor;
wherein the vehicle processor is further configured for providing the at least one power level value to the charging station via the vehicle data interface.

8. The vehicle of claim 7, wherein executing the update comprises retrieving (330) updated digital data via the vehicle data interface.

9. The vehicle of claim 7, wherein the vehicle processor is further configured for sending (365) at least one vehicle data value to the charging station via the vehicle data interface, while charging the at least one battery, in response to receiving (360) from the charging station a request for the at least one vehicle data value.

10. The vehicle of claim 6, wherein the vehicle processor is further configured for executing (355) while charging the at least one battery at least one operation, selected from the group of operations of: a diagnostic operation, and a self-maintenance operation, in response to receiving (350) from the charging station a maintenance instruction to execute the at least one operation.

11. The vehicle of claim 6, further comprising a human-machine interface (123) for interacting with a user (150);
wherein the vehicle processor is further configured for:
receiving from the user at least one confirmation value via the human-machine interface; and
executing the update subject to receiving the at least one confirmation value.

12. A system for updating digital data in a vehicle, comprising:
a vehicle (120), comprising at least one hardware processor (vehicle processor) (121); and
a vehicle charging station (charging station) (110), comprising at least one other hardware processor (station processor) (111) configured for, when the vehicle is connected to the charging station:
sending (301) to the vehicle a request for at least one power level value; and in response to receiving the at least one power level value from the vehicle:
computing (201) an expected amount of time for charging at least one battery of the vehicle (a charging time);
computing (210) an expected amount of time for executing an update of digital data of the vehicle (an update time), where update time includes an amount of time for reverting the update; and
subject to identifying that the update time is less than the charging time according to a time comparison test, sending (327) the vehicle an instruction to execute the update;
wherein the vehicle processor is configured for, when the vehicle is connected to the charging station:
providing (310) to the charging station at least one power level value in response to receiving (301) therefrom the request for the at least one power value; and
while charging the at least one battery, executing (230) the update in response to receiving (327) from the charging station the instruction to execute the update.

13. The system of claim 12, wherein the digital data comprises at least one of:
one or more sets of computer instructions; and
one or more sets of component configuration values.

14. The system of claim 12, wherein computing the charging time is according to at least one power level value of the vehicle.

15. The system of claim 12, wherein executing the update comprises:
sending from the charging station to the vehicle an instruction to execute the update; and executing the update by at least one hardware processor of the vehicle (vehicle processor) while charging the at least one battery, in response to receiving from the charging station the instruction to execute the update.
